# EUROPEAN PATENT APPLICATION

(11) **EP 3 604 194 A1**
(43) Date of publication of application: **05.02.2020**
(21) Application number: 18382585.0
(22) Date of filing: 01.08.2018
(51) Int. Cl.: B66B 3/00

(54) **TRACKING SERVICE MECHANIC STATUS DURING ENTRAPMENT**

(71) Applicant: Otis Elevator Company, Farmington, Connecticut 06032 (US)
(72) Inventor: Natarajan, Ramasivam, Madhapur, Hyderabad 500081 (IN); Scoville, Bradley Armand, Farmington, CT 06032 (US); Morrison, Matthew Sean, Bloomfield, CT 06002 (US); Ramos Ibarra, Enrique, 28918 Leganes, Madrid (ES); Peng, ZhenXing, ChangNing District, Shanghai 200335 (CN); Hu, Lang, Shanghai, Shanghai 200335 (CN); Mu, Tao, Tianjin, Tianjin 300457 (CN); Dong, Donvy, Shanghai, Shanghai 200335 (CN)
(74) Representative: Balder IP Law, S.L.

(57) **Abstract**

Embodiments include a system, method and controller for tracking service mechanic status. The embodiments include a controller of an elevator system that is operably coupled to an elevator, wherein the controller is configured to control the elevator and detect a status of the elevator, and a processor operably coupled to the controller and a memory, wherein the memory is configured to store responder information, wherein the processor is configured to receive responder information from the memory and generate notification information based at least in part on the responder information. In addition, the embodiments include an interface unit for transmitting the notification information, and a notification unit operably coupled to the elevator and is configured to provide the notification information.

## Description

### BACKGROUND

The embodiments herein relate to elevator systems, and in particular to, tracking service mechanic status during entrapment.

Elevators provide a convenient and efficient means to transport people and cargo to different floors of a building. However, the elevator doors and other components of the elevator system require regular maintenance to ensure the proper functioning of the elevator and minimize any unscheduled downtime of the elevator. For example, maintenance can be performed to inspect the elevator and landing doors so they remain operational to load/unload the cargo and passengers. In addition, elevators can have different designs that require specific types of maintenance to ensure the system's reliability. In the event the elevator doors malfunction issues can arise with the timely arrival and delivery of its passengers and cargo.

### BRIEF SUMMARY

According to an embodiment, a system for tracking service mechanic status is provided. The system includes a controller of an elevator system that is operably coupled to an elevator, wherein the controller is configured to control the elevator and detect a status of the elevator, and a processor operably coupled to the controller and a memory, wherein the memory is configured to store responder information, wherein the processor is configured to receive responder information from the memory and generate notification information based at least in part on the responder information. The system also includes an interface unit for transmitting the notification information, and a notification unit operably coupled to the elevator and is configured to provide the notification information.

In addition to one or more of the features described herein, or as an alternative, further embodiments include notification information that includes at least one of a responder identifier information, location information, time of arrival information, and real-time mapping information.

In addition to one or more of the features described herein, or as an alternative, further embodiments include a controller that is configured to receive supplemental information, wherein the supplemental information is included in the notification information and is at least one of a responder rating information, responder image data, and years of experience information.

In addition to one or more of the features described herein, or as an alternative, further embodiments include a notification unit that is at least one of an audio unit or a display unit.

In addition to one or more of the features described herein, or as an alternative, further embodiments include an interface that is configured to push the notification information to a user device.

In addition to one or more of the features described herein, or as an alternative, further embodiments include a responder device that is operably coupled to the system and is configured to provide updates to the system.

In addition to one or more of the features described herein, or as an alternative, further embodiments include a responder device that is configured to indicate an arrival of the responder at the elevator and update the notification information responsive to the indication.

According to another embodiment, a method for tracking a status of a service mechanic is provided. The method includes detecting a status of an elevator of the elevator system, and receiving responder information responsive to the detected status of the elevator. The method also includes generating notification information based at least in part on the responder information, transmitting the notification information to the elevator, and providing the notification information to the elevator.

In addition to one or more of the features described herein, or as an alternative, further embodiments include notification information that is at least one of a responder identifier information, location information, time of arrival information, and real-time mapping information.

In addition to one or more of the features described herein, or as an alternative, further embodiments include a controller that is configured to receive supplemental information, wherein the supplemental information is included in the notification information and is at least one of a responder rating information, responder image data, and years of experience information.

In addition to one or more of the features described herein, or as an alternative, further embodiments include a notification unit that is at least one of an audio unit or a display unit.

In addition to one or more of the features described herein, or as an alternative, further embodiments include an interface that is configured to push the notification information to a user device.

In addition to one or more of the features described herein, or as an alternative, further embodiments include a responder device that is operably coupled to the system and is configured to provide updates to the system.

In addition to one or more of the features described herein, or as an alternative, further embodiments include a responder device that is configured to indicate an arrival of the responder at the elevator and update the notification information responsive to the indication.

In a different embodiment, a controller of an elevator system for tracking a status of a service mechanic is provided. The controller includes one or more processors, at least one memory, the memory including instructions that, upon execution by at least one of the one or more processors, cause the controller to perform a method, where the controller comprises an interface for communicating with the elevator system. The controller is configured to detect a status of an elevator of the elevator system, and receive responder information responsive to the detected status of the elevator. The controller is configured to generate notification information based at least in part on the responder information, transmit the notification information to the elevator, and provide the notification information to the elevator.

In addition to one or more of the features described herein, or as an alternative, further embodiments include notification information that includes at least one of a responder identifier information, location information, time of arrival information, and real-time mapping information.

In addition to one or more of the features described herein, or as an alternative, further embodiments include a controller that is configured to receive supplemental information, wherein the supplemental information is included in the notification information and is at least one of a responder rating information, responder image data, and years of experience information.

In addition to one or more of the features described herein, or as an alternative, further embodiments include an interface that is configured to push the notification information to a user device.

In addition to one or more of the features described herein, or as an alternative, further embodiments include a responder device that is operably coupled to the controller and is configured to provide updates to the system.

In addition to one or more of the features described herein, or as an alternative, further embodiments include a responder device that is configured to indicate an arrival of the responder at the elevator and update the notification information responsive to the indication.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The present disclosure is illustrated by way of example and not limited in the accompanying figures in which like reference numerals indicate similar elements.
FIG. 1 depicts a system for practicing the techniques described herein;
FIG. 2 is a schematic illustration of an elevator system that may employ various embodiments of the present disclosure;
FIG. 3 depicts tracking service mechanic status during entrapment in accordance with one or more embodiments; and
FIG. 4 depicts a flowchart of a method for tracking service mechanic status during entrapment in accordance with one or more embodiments.

### DETAILED DESCRIPTION

In the event passengers become trapped in a confined space such as an elevator car due to malfunctioning doors, overspeed issues, power supply issues, etc. the passengers may experience a heightened distressed state. The distress may be caused by the passenger being unaware if anyone notified of their situation or if anyone is on the way to provide assistance to the passenger. The stressful state of the trapped passenger may be alleviated if the passenger is assured that help is on the way and will arrive within an estimated time. Currently there are no means to notify the passengers of the service mechanic's status which may further panic the entrapped passenger.

In today's environment, elevator cars are equipped with display units and audio equipment which can be leveraged to provide updates to the user. The alerts can provide real-time updates as to the state of the responder. The techniques described herein provide for presenting live service mechanic status information to the trapped passengers in an elevator car to indicate that an attendant within close proximity has been made aware of and is responding to the situation.

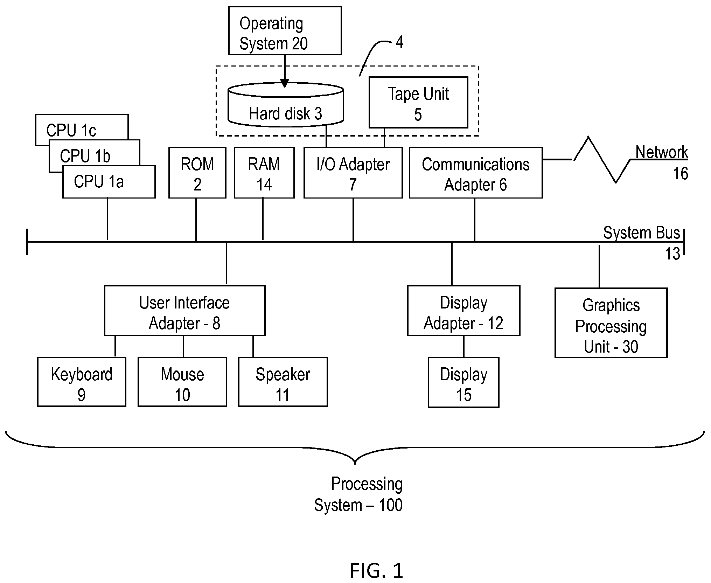

Referring to FIG. 1, there is shown an embodiment of a processing system 100 for implementing the teachings herein. In this embodiment, the system 100 has one or more central processing units (processors) la, 1b, 1c, etc. (collectively or generically referred to as processor(s) 1). In one embodiment, each processor 1 may include a reduced instruction set computer (RISC) microprocessor. Processors 1 are coupled to system memory 14 and various other components via a system bus 13. Read only memory (ROM) 2 is coupled to the system bus 13 and may include a basic input/output system (BIOS), which controls certain basic functions of system 100.

FIG. 1 further depicts an input/output (I/O) adapter 7 and a network adapter 6 coupled to the system bus 13. I/O adapter 7 may be a small computer system interface (SCSI) adapter that communicates with a hard disk 3 and/or tape storage drive 5 or any other similar component. I/O adapter 7, hard disk 3, and tape storage device 5 are collectively referred to herein as mass storage 4. Operating system 20 for execution on the processing system 100 may be stored in mass storage 4. A network adapter 6 interconnects bus 13 with an outside network 16 enabling data processing system 100 to communicate with other such systems. A screen (e.g., a display monitor) 15 is connected to system bus 13 by display adaptor 12, which may include a graphics adapter to improve the performance of graphics intensive applications and a video controller. In one embodiment, adapters 7, 6, and 12 may be connected to one or more I/O busses that are connected to system bus 13 via an intermediate bus bridge (not shown). Suitable I/O buses for connecting peripheral devices such as hard disk controllers, network adapters, and graphics adapters typically include common protocols, such as the Peripheral Component Interconnect (PCI). Additional input/output devices are shown as connected to system bus 13 via user interface adapter 108 and display adapter 12. A keyboard 9, mouse 10, and speaker 11 all interconnected to bus 13 via user interface adapter 8, which may include, for example, a Super I/O chip integrating multiple device adapters into a single integrated circuit.

In embodiments, the processing system 100 includes a graphics processing unit 30. Graphics processing unit 30 is a specialized electronic circuit designed to manipulate and alter memory to accelerate the creation of images in a frame buffer intended for output to a display. In general, graphics processing unit 30 is very efficient at manipulating computer graphics and image processing, and has a highly parallel structure that makes it more effective than general-purpose CPUs for algorithms where processing of large blocks of data is done in parallel.

Thus, as configured in FIG. 1, the system 100 includes processing capability in the form of processors 1, storage capability including system memory 14 and mass storage 4, input means such as keyboard 9 and mouse 10, and output capability including speaker 11 and display 15. In one embodiment, a portion of system memory 14 and mass storage 4 collectively store an operating system to coordinate the functions of the various components shown in FIG. 1.

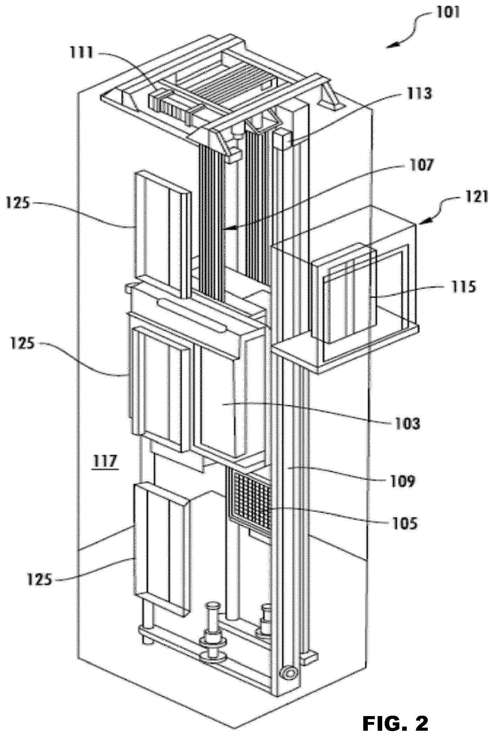

FIG. 2 is a perspective view of an elevator system 101 including an elevator car 103, a counterweight 105, a tension member 107, a guide rail 109, a machine 111, a position reference system 113, and a controller 115. The elevator car 103 and counterweight 105 are connected to each other by the tension member 107. The tension member 107 may include or be configured as, for example, ropes, steel cables, and/or coated-steel belts. The counterweight 105 is configured to balance a load of the elevator car 103 and is configured to facilitate movement of the elevator car 103 concurrently and in an opposite direction with respect to the counterweight 105 within an elevator shaft 117 and along the guide rail 109.

The tension member 107 engages the machine 111, which is part of an overhead structure of the elevator system 101. The machine 111 is configured to control movement between the elevator car 103 and the counterweight 105. The position reference system 113 may be mounted on a fixed part at the top of the elevator shaft 117, such as on a support or guide rail, and may be configured to provide position signals related to a position of the elevator car 103 within the elevator shaft 117. In other embodiments, the position reference system 113 may be directly mounted to a moving component of the machine 111, or may be located in other positions and/or configurations as known in the art. The position reference system 113 can be any device or mechanism for monitoring a position of an elevator car and/or counter weight, as known in the art. For example, without limitation, the position reference system 113 can be an encoder, sensor, or other system and can include velocity sensing, absolute position sensing, etc., as will be appreciated by those of skill in the art.

The controller 115 is located, as shown, in a controller room 121 of the elevator shaft 117 and is configured to control the operation of the elevator system 101, and particularly the elevator car 103. For example, the controller 115 may provide drive signals to the machine 111 to control the acceleration, deceleration, leveling, stopping, etc. of the elevator car 103. The controller 115 may also be configured to receive position signals from the position reference system 113 or any other desired position reference device. When moving up or down within the elevator shaft 117 along guide rail 109, the elevator car 103 may stop at one or more landings 125 as controlled by the controller 115. Although shown in a controller room 121, those of skill in the art will appreciate that the controller 115 can be located and/or configured in other locations or positions within the elevator system 101. In one embodiment, the controller may be located remotely or in the cloud.

The machine 111 may include a motor or similar driving mechanism. In accordance with embodiments of the disclosure, the machine 111 is configured to include an electrically driven motor. The power supply for the motor may be any power source, including a power grid, which, in combination with other components, is supplied to the motor. The machine 111 may include a traction sheave that imparts force to tension member 107 to move the elevator car 103 within elevator shaft 117.

Although shown and described with a roping system including tension member 107, elevator systems that employ other methods and mechanisms of moving an elevator car within an elevator shaft may employ embodiments of the present disclosure. For example, embodiments may be employed in ropeless elevator systems using a linear motor to impart motion to an elevator car. Embodiments may also be employed in ropeless elevator systems using a hydraulic lift to impart motion to an elevator car. FIG. 1 is merely a non-limiting example presented for illustrative and explanatory purposes.

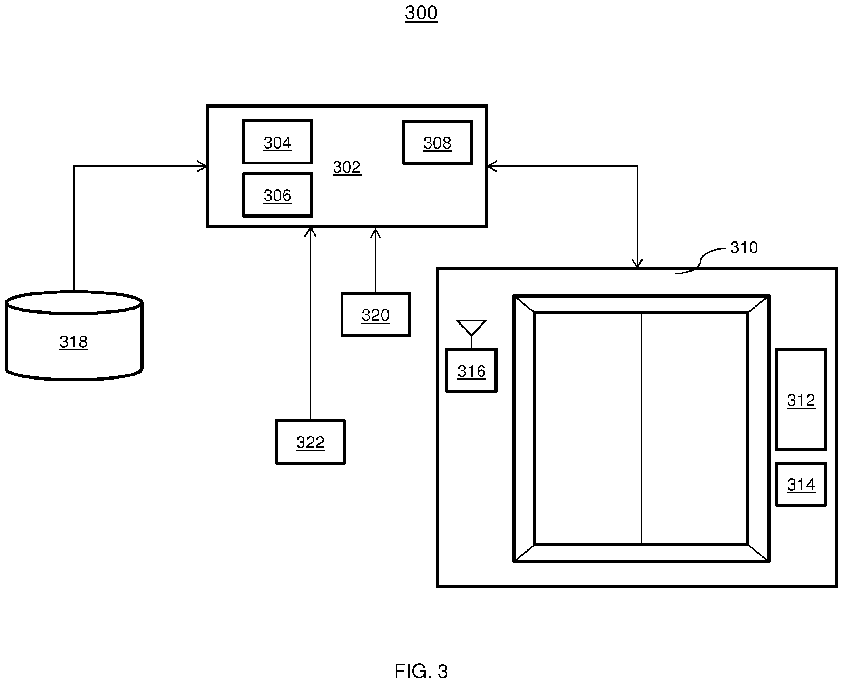

Now referring to FIG. 3, a system 300 for tracking service mechanic status during entrapment in accordance with one or more embodiments is shown. In one or more embodiments, the system 300 can be implemented with any of the elements of FIG. 1 and FIG. 2.

As shown in FIG. 3, the system 300 includes a controller 302 that has a processor 304 and memory 306. In addition, the controller 302 includes an interface 308 to communicate with various devices and systems. In FIG. 3, the controller 302 is coupled to the elevator 310 and is configured to monitor the status of the elevator 310. The status can be obtained by sensors or other devices that can determine the position/operation of the elevator doors. In the event the any part of the elevator is not operating properly a fault can be detected and triggered in the elevator. The elevator 310 as shown includes a display unit 312 in the interior of the elevator car which can include any type of display such as a digital display. In addition, the elevator 310 can include an audio unit 314 in the interior of the elevator car which can be a speaker/microphone or other type of audio device.

The elevator 310 includes interface unit 316 for communicating with the display unit 312, elevator controller 302, etc. over a wired or wireless connection for example, over a Bluetooth connection, near-field communication (NFC) connection, or Wi-Fi connection to name a few. It is to be understood that each component, device and piece of equipment can be configured with the appropriate interfaces to communicate over the respective connections.

The system 300 also includes service mechanic database 318 that is coupled to the controller 302. The database 318 is configured to store information related to each of the service mechanics and can include profile information. The profile can include data such as the name information of the service mechanic, phone number or other contact information, position, etc. In other embodiments, the responder information may be stored in a distributed manner where the pertinent information is not stored in a central database. For example, the data can originate from a decentralized location such as a memory of a mobile device of a service mechanic where the data does is not necessarily required to be stored over in a central database in order to be transmitted to the passenger. In addition, supplemental information can be stored in the database 318 such as rating information and years of experience. In one or more embodiments, the rating information can be crowd sourced information or generated internally by the mechanic's company to indicate a satisfaction level or service level. The rating information can be based on a 5-star rating or on a scale to 10. Any type of known rating scale can be implemented in the system 300.

In one or more embodiments, a location/GPS device 320 can be incorporated as part of the responder device 322 or maintained separately to track the location of the responding service mechanic. In addition, the system 300 can receive real-time updates such as the location of the user or repair of the elevator. It is to be understood that other navigation type systems and data can be provided to the passenger through the system 300.

Mechanic responder device 322 data received from the responder. In one or more embodiments, the service mechanic may carry portable mobile devices such as tablets or mobile phones/computers that are used to troubleshoot the elevator 310 or elevator system 310. These devices 322 can be coupled to the system 300 and provide additional data such as the location information or identity information of a responding service mechanic. The device 322 can communicate with the system 300 over a wired, wireless, cellular connection, etc.

In other embodiments, the status information can be associated with responders such as but not limited police officers, fire department personnel, paramedics, etc. The responder's information can be collected or input manually into the system and presented to the entrapped passenger(s) to alleviate their increased stress level. At minimum, information regarding the responding party, such as the fire department, medical, or police, and their estimated time of arrival can be presented to the passenger in the elevator 310.

In one or more embodiments, the notification unit can provide network connection information, such as a Wi-FI network and password information, where a user can manually connect to receive information on the user's personal device regarding the current responder's status.

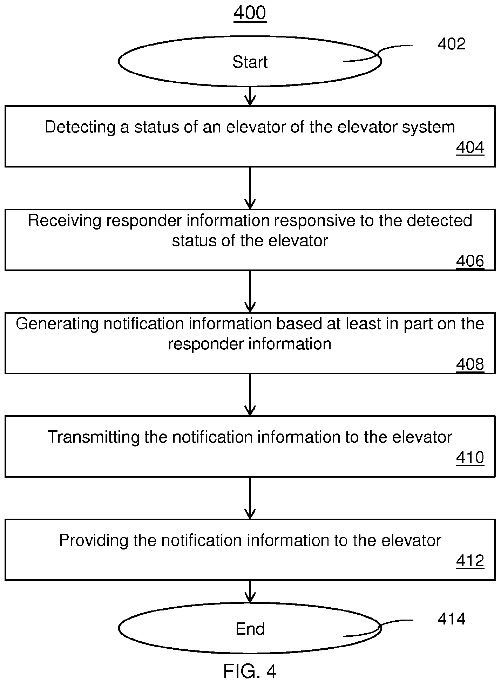

In FIG. 4, a method 400 for tracking a service mechanic status during entrapment in accordance with one or more embodiments is shown.

The method 400 begins at block 402 and proceeds to block 404 which provides for detecting a status of an elevator of the elevator system. The status that is detected by the elevator system can indicate issues including malfunctioning elevator doors, loss of power issues, non-responsive floor selections, or other issue that can lead to entrapment of passengers in the elevator car. It is to be understood that any other issues that cause elevator stoppages resulting in trapped passengers is within the scope including but not limited to safety tripping (i.e. overspeed of the elevator car), issues with power supplies, etc. These conditions are monitored by the elevator system, such as the elevator system of FIG. 3 where the controller 302 can detect the state of the elevator 310 using sensors that are positioned in the elevator system 300 and trigger an action to contact a service mechanic.

Proceeding to block 406, the method 400 provides for receiving responder information responsive to the detected status of the elevator. The responder information can include the responder identifier information, location information, estimated time of arrival information, and real-time mapping information. In addition, supplemental information can be obtained by the system where the supplemental information includes the responder rating information, responder image data, years of experience information, on-time performance, etc. For example, the service mechanic's past record of on-time delivery from previous entrapped passenger removals can be communicated to the trapped passengers. The responder information and the supplemental information can be aggregated together and presented to the passenger. Also, updated information can be obtained from the responder device 322 such as arrival information, current location information, etc. that can be included in the notification information.

At block 408, the method 400 provides for generating notification information based at least in part on the responder information. After the responder has been identified in the system, the controller 302 can be configured to retrieve additional information associated with the responder from a database such image data, contact information, rating information, years of experience and the like. This information is aggregated with the responder information to form the notification information. Block 410 provides for transmitting the notification information to the elevator. In one or more embodiments, the transmission can occur over a wired and/or wireless connection. For example, the transmission can occur over a phone line or a screen within the cab with 2-way communication via the internet. In addition, the user can be prompted on the mobile devices through a mobile application associated with the elevator system. In other embodiments, a communication interface can allow the passenger to contact the service mechanic. For example, the trapped passenger may want to talk to the mechanic before they are removed from the elevator to provide additional information.

The method 400 advances to block 412 and includes providing the notification information to the elevator. The notification information can be provided to the entrapped passengers through an audio unit 314 and/or display unit 312 based on the configuration of the elevators. Finally, after the responder arrives on the scene the responder can confirm his arrival using the device 322 to indicate to the passenger their position. The method 400 ends at block 414.

The technical effects and benefits include presenting the service mechanic information to trapped passengers including location, experience level, on-time performance, etc. which are valuable pieces of information that are not typically provided to the passengers. The technical effects and benefits also include providing real-time updates as to the status of the responding mechanic thereby alleviating the emotional distress experienced by trapped passengers in an elevator. In addition, these techniques leverage the existing equipment on the elevator to implement the notification mechanism.

As described above, embodiments can be in the form of processor-implemented processes and devices for practicing those processes, such as a processor. Embodiments can also be in the form of computer program code containing instructions embodied in tangible media, such as network cloud storage, SD cards, flash drives, floppy diskettes, CD ROMs, hard drives, or any other computer-readable storage medium, wherein, when the computer program code is loaded into and executed by a computer, the computer becomes a device for practicing the embodiments. Embodiments can also be in the form of computer program code, for example, whether stored in a storage medium, loaded into and/or executed by a computer, or transmitted over some transmission medium, loaded into and/or executed by a computer, or transmitted over some transmission medium, such as over electrical wiring or cabling, through fiber optics, or via electromagnetic radiation, wherein, when the computer program code is loaded into an executed by a computer, the computer becomes an device for practicing the embodiments. When implemented on a general-purpose microprocessor, the computer program code segments configure the microprocessor to create specific logic circuits.

The term "about" is intended to include the degree of error associated with measurement of the particular quantity and/or manufacturing tolerances based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

Those of skill in the art will appreciate that various example embodiments are shown and described herein, each having certain features in the particular embodiments, but the present disclosure is not thus limited. Rather, the present disclosure can be modified to incorporate any number of variations, alterations, substitutions, combinations, sub-combinations, or equivalent arrangements not heretofore described, but which are commensurate with the scope of the present disclosure. Additionally, while various embodiments of the present disclosure have been described, it is to be understood that aspects of the present disclosure may include only some of the described embodiments. Accordingly, the present disclosure is not to be seen as limited by the foregoing description, but is only limited by the scope of the appended claims.

## Claims

1. A system for tracking service mechanic status, the system comprising:
a controller of an elevator system that is operably coupled to an elevator, wherein the controller is configured to control the elevator and detect a status of the elevator;
a processor operably coupled to the controller and a memory, wherein the memory is configured to store responder information, wherein the processor is configured to receive responder information from the memory and generate notification information based at least in part on the responder information;
an interface unit for transmitting the notification information; and
a notification unit operably coupled to the elevator, configured to provide the notification information.

2. The system of claim 1, wherein the notification information includes at least one of a responder identifier information, location information, time of arrival information, and real-time mapping information.

3. The system of claim 2, wherein the controller is configured to receive supplemental information, wherein the supplemental information is included in the notification information and is at least one of a responder rating information, responder image data, and years of experience information.

4. The system of claim 1, wherein the notification unit is at least one of an audio unit or a display unit.

5. The system of claim 1, further comprising an interface that is configured to push the notification information to a user device.

6. The system of claim 1, further comprising a responder device operably coupled to the system and is configured to provide updates to the system.

7. The system of claim 6, wherein the responder device is configured to indicate an arrival of the responder at the elevator and update the notification information responsive to the indication.

8. A method for tracking a status of a service mechanic, the method comprising:
detecting a status of an elevator of the elevator system;
receiving responder information responsive to the detected status of the elevator;
generating notification information based at least in part on the responder information;
transmitting the notification information to the elevator; and
providing the notification information to the elevator.

9. The method of claim 8, wherein the notification information includes at least one of a responder identifier information, location information, time of arrival information, and real-time mapping information.

10. The method of claim 9, wherein the controller is configured to receive supplemental information, wherein the supplemental information is included in the notification information and is at least one of a responder rating information, responder image data, and years of experience information.

11. The method of claim 8, wherein the notification unit is at least one of an audio unit or a display unit.

12. The method of claim 8, further comprising an interface that is configured to push the notification information to a user device.

13. The method of claim 8, further comprising a responder device operably coupled to the system and is configured to provide updates to the system.

14. The method of claim 13, wherein the responder device is configured to indicate an arrival of the responder at the elevator and update the notification information responsive to the indication.

15. A controller of an elevator system for tracking a status of a service mechanic, the controller comprising:
an interface for communicating with the elevator system;
one or more processors; and
at least one memory, the memory including instructions that, upon execution by at least one of the one or more processors, cause the system to perform a method for tracking a status of a service mechanic, the controller is configured to:
detect a status of an elevator of the elevator system;
receive responder information responsive to the detected status of the elevator;
generate notification information based at least in part on the responder information;
transmit the notification information to the elevator; and
provide the notification information to the elevator

16. The controller of claim 15, wherein the notification information includes at least one of a responder identifier information, location information, time of arrival information, and real-time mapping information.

17. The controller of claim 16, wherein the controller is configured to receive supplemental information, wherein the supplemental information is included in the notification information and is at least one of a responder rating information, responder image data, and years of experience information.

18. The controller of claim 15, further comprising an interface that is configured to push the notification information to a user device.

19. The controller of claim 15, further comprising a responder device operably coupled to the controller and is configured to provide updates to the system.

20. The controller of claim 19, wherein the responder device is configured to indicate an arrival of the responder at the elevator and update the notification information responsive to the indication.
